# NEUE EUROPÄISCHE PATENTSCHRIFT

(11) **EP 0 643 467 B2**
(45) Veröffentlichungstag und Bekanntmachung des Hinweises auf die Entscheidung über den Einspruch: **23.07.2003**
(45) Hinweis auf die Patenterteilung: 05.03.1997
(21) Anmeldenummer: 94114263.0
(22) Anmeldetag: 10.09.1994
(51) Int. Cl.: H02K 15/12, H01F 41/00, H01F 41/12

(54) **Verfahren zur Fixierung von Wickelgütern mit radikalisch polymerisierbaren Massen**
Fixing method for winding materials with radical polymerisable compositions
Méthode de fixation de bobinages à l'aide de compositions polymérisables par réaction radicale

(30) Priorität: 11.09.1993 DE 4331086
(43) Veröffentlichungstag der Anmeldung: 15.03.1995
(73) Patentinhaber: E.I. DU PONT DE NEMOURS AND COMPANY, Wilmington Delaware 19898 (US)
(72) Erfinder: Kiessling, Gerhard, D-45527 Hattingen (DE); Pillath, Raimund, D-42369 Wuppertal (DE); Reuther, Stefan, D-42285 Wuppertal (DE); Richter, Anja, D-42103 Wuppertal (DE); Conrad, Horst, D-42289 Wuppertal (DE)
(74) Vertreter: Gille Hrabal Struck Neidlein Prop Roos

(56) Entgegenhaltungen:
- WO-A-92/01015
- US-A- 4 985 472
- PATENT ABSTRACTS OF JAPAN vol. 4, no. 175 (E-036) 3. Dezember 1980 & JP-A-55 121 625 (MITSUBISHI ELECTRIC CORP) 18. September 1980
- PATENT ABSTRACTS OF JAPAN vol. 7, no. 140 (E-182) 18. Juni 1983 & JP-A-58 054 622 (MITSUBISHI DENKI KK) 31. März 1983
- PATENT ABSTRACTS OF JAPAN vol. 5, no. 145 (E-074) 12. September 1981 & JP-A-56 079 420 (HITACHI CHEM CO LTD) 30. Juni 1981
- Proceedings of the Electrical Electronics Insulation Conference, Chicago, 1984, Seiten 16-22
- Radtech Europe, 29.09 bis 02.10.1991, "Creating Tomorrow's Technology", Papers presented at the Radtech Europe Conference in Edinburgh, Scotland 29 Sept - 2 Okt 1991
- Beck Informationen, Traeufelharze im Elektromaschinenbau, Juni 1973

## Beschreibung

Die Erfindung betrifft ein Verfahren zur Fixierung von Wickelgütern, insbesondere von Drahtwicklungen elektrischer Betriebsmittel, wie Rotoren, Statoren und Transformatoren, durch Tränken (z.B. Tauchen) mit radikalisch polymerisierbaren Massen.

Elektrische Betriebsmittel, wie Rotoren, Statoren oder Transformatoren, bestehen häufig aus einem Metallkern, auf den ein folien- oder drahtförmiges Material, z.B. eine Kupferfolie oder ein Kupferdraht gewickelt ist. Die Wicklungen werden mit radikalisch polymerisierbaren Massen imprägniert und anschließend ausgehärtet, um eine Fixierung der Wicklungen und damit ein Aufrechterhalten der Funktionsweise derartiger Wickelgüter zu erreichen. Die zum Härten notwendige Energie erfolgt durch Wärmezufuhr bei Temperaturen von über 100°C in einem Ofen. Desweiteren ist eine Härtung durch induktives Beheizen möglich.

Die radikalisch polymerisierbaren Massen, sogenannte Tränkharze oder Tränkmittel, enthalten beispielsweise ungesättigte Polyesterharze, die in ungesättigten aromatischen oder aliphatischen radikalisch polymerisierbaren Monomeren, wie z.B. Styrol oder Hexandioldiacrylat, gelöst sind. Derartige Monomere weisen häufig einen sehr hohen Dampfdruck auf, so daß ein großer Teil davon während der thermischen Aushärtung entweicht. Hierdurch ergeben sich Umweltprobleme; die styrolhaltigen Materialien weisen z.B. einen unangenehmen Geruch auf und haben eine relativ hohe Toxizität. Es ist daher eine Entsorgung, beispielsweise durch Nachverbrennung, notwendig.

Weiterhin ist es bekannt, daß die zum Härten notwendige Wärme dadurch erzeugt wird, daß nach dem Imprägnieren der Wickelgüter mit den radikalisch polymerisierbaren Massen Strom durch die elektrisch leitenden Wicklungen geleitet wird, der dann die notwendigen Temperaturen erzeugt. Dies führt zu einem Härten der Tränkharze an und in den Drahtwicklungen. Die Bauteile enthalten jedoch auch Masseteile, in denen kein Strom fließt. An diesen wird das Tränkharz nicht ausreichend gehärtet. Ein zusätzliches Härten durch Wärmezufuhr mittels eines Ofens ist erforderlich.

Weiterhin ist in der DE -A-40 22 235 beschrieben, elektrische Wickelgüter mit radikalisch polymerisierbaren Tränkmitteln zu beschichten und zur Vermeidung des Abdampfens von gesundheitsschädlichen Substanzen die Oberfläche mit UV-Strahlen zu härten. Zum Aushärten der imprägnierten Wicklungen erfordert dieses Verfahren jedoch die anschließende energieaufwendige Wärmebehandlung in einem Ofen. Ähnlich wird in der DD 295 056 verfahren.

Das Dokument JP-A-55 121 625 beschreibt ein Verfahren zur Fixierung von Wickelgütern aus elektrisch leitfähigen Materialien durch Tränken mit radikalisch polymerisierbaren Massen und thermisches Härten, wobei die Wickelgüter durch Tauchen, Fluten, Vakuumimprägnieren, Vakuumdruckimprägnieren oder Träufeln getränkt werden, durch energiereiche Strahlung ausgehärtet werden und anschließend durch thermische Behandlung ausgehärtet werden.

"Proceedings of the Electrical Electronics lnsulation Conference, Chicago", 1984, seiten 16-22 beschreibt die kombiniente VV und thermische Härtung von durch Tauchen oder Tränfeln imprägnierten Wickelgütern. Die zu imprägnierenden Materialien Können zur Trocknung voverwärmt abgekühlt und getaucht werden. Als nächster Schritt folgt die VV-Aärtung, der sich die thermische Härtung unschließt.

Aufgabe der vorliegenden Erfindung ist die Bereitstellung eines Verfahrens zur Beschichtung von Wickelgütern mit Tränkmitteln, die zur Fixierung dreidimensionaler Bauteile mit Drahtwicklungen geeignet sind, die ein gutes Eindringvermögen in den Bauteilen zeigen, eine verringerte Emission von gesundheitsschädlichen flüchtigen Substanzen aufweisen und einen verringerten Energiebedarf zum Vernetzen benötigen.

Es hat sich gezeigt, daß diese Aufgabe durch das einen Gegenstand der Erfindung bildende Verfahren das in den Patentansprüchen definiert ist.

Insbesondere wird beim erfindungsgemäßen Verfahren gleichzeitig mit oder nach dem thermischen Härten die freiliegende Oberfläche der getränkten Wickelgüter durch energiereiche Strahlung ausgehärtet. Gemäß einer bevorzugten Ausführungsform der Erfindung erfolgt das thermische Härten durch Anlegen von elektrischem Strom an die Wicklungen der Wickelgüter.

Die erfindungsgemäße Vorerwärmung kann durch Anlegen von elektrischem Strom an die Wicklungen der Wickelgüter erfolgen. Es ist beispielsweise möglich die Wickelgüter auf Temperaturen von bis zu 180°C vorzuerwärmen.

Durch das erfindungsgemäße Verfahren werden die Emissionen von gesundheitsgefährdenden Substanzen vermindert sowie eine bessere Ausnutzung der Tränkmittel erreicht. Weiterhin kann die zum Vernetzen notwendige Energie deutlich verringert werden. Die Tränkmassen werden nach bekannten Verfahren auf die Wickelgüter aufgebracht. Dabei ist darauf zu achten, daß ein gutes Anfließen und Eindringen der Tränkmittel möglich ist. Vor dem Aufbringen bzw. bevorzugt danach ist es möglich durch Stromfluß in elektrischen Leitungen eine erhöhte Temperatur zu erzeugen. Damit wird unmittelbar bei dem Tränken schon eine Vernetzung eingeleitet. Die Tränkmittel werden im Inneren der Wicklungen (Spule) fixiert und können nicht mehr abfließen. Durch das schnelle Fixieren wird auch die Bildung von Fehlstellen, z.B. Hohlräumen, durch Abfließen verhindert. Die Vernetzung wird durchgeführt und die flüchtigen reaktiven Bestandteile haben weniger Zeit in die Dampfphase überzugehen.

Die Temperatur kann über den Stromfluß geregelt werden. Sie wird so gewählt, daß eine ausreichende Vemetzung der Tränkmittel erzielt wird. Die Wärme entsteht in den mit dem Tränkmittel zu beschichtenden Bauteilen, d.h. eine unnötige Erwärmung von elektrischen nichtleitenden Bauteilen findet nicht statt. Die Temperatur kann über den Stromfluß gemessen und umgehend gesteuert werden ohne zusätzliche Meßaggregate. Durch eine erhöhte Temperatur schon beim Aufbringen der Tränkmassen, kann das Eindringen der Tränkmittel in die Substrate verbessert werden. Es kann gegebenenfalls auch mit Materialien von höherer Viskosität gearbeitet werden, die dann in der Wärme gut eindringen können.

Bei den üblichen Tränkverfahren werden jedoch auch teilweise Kunststoff- und Masseteile beschichtet. Diese beschichteten Bereiche vernetzen durch die Temperaturentwicklung in den elektrisch leitenden Teilen nur gering. Um eine ordnungsgemäße Vernetzung zu erzeugen, werden die Bauteile nach dem Vernetzen an den Wicklungen durch Wärme einer Behandlung mit energiereicher Strahlung, z.B. UV-Strahlung oder Elektronenstrahlen unterzogen. Dabei wird insbesondere die Oberfläche der Bauteile gehärtet, insbesondere auch die nur gering beschichteten Flächen von Masseteilen, die durch den Stromfluß nicht erwärmt wurden. Nach der Behandlung mit den energiereichen Strahlen sind die Substrate einheitlich vernetzt.

Erfindungsgemäß werden radikalisch polymerisierbare Massen verwendet, die sowohl durch energiereiche Strahlung (beispielsweise UV-Strahlung oder Elektronenstrahlung) als auch thermisch härtbar sind.

Im Rahmen der Erfindung werden Acylphosphinoxide als Photoinitiatoren verwendet. Die Acylphosphinoxide sind als solche dem Fachmann geläufig. Sie werden beispielsweise beschrieben in den vorstehend genannten EP-A-0 007 086, EP-A-0 007 508 und EP-A-0 0 304 783. Spezielle Beispiele sind solche der folgenden allgemeinen Formel 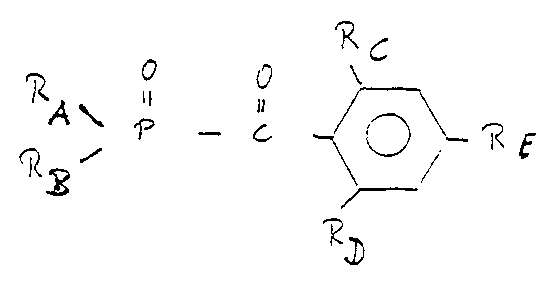 mit
- R_{A} =: geradkettiger oder verzweigter Alkylrest mit 1 bis 6 Kohlenstoffatomen,
- R_{B} =: Bedeutung von R_{A}, wobei R_{A} und R_{B} untereinander gleich oder verschieden sein können oder für einen Aryloxy- oder einen Arylalkoxyrest steht oder R_{A} und R_{B} miteinander zu einem o-Phenylendioxyrest verbunden sind,
- R_{C}, R_{D}, R_{E} =: Alkyl-, Alkoxy- oder Alkylthioreste mit 1 bis 6 Kohlenstoffatomen sind, wobei die Reste R_{C}, R_{D} und R_{E} gleich oder verschieden sein können.

Die vorstehend genannten Photoinitiatoren können allein oder im Gemisch eingesetzt werden.

Auch bei den auf Wärme ansprechbaren, erfindungsgemäß verwendbaren Radikalinitiatoren handelt es sich um übliche auf dem Gebiet der Wärmehärtung von radikalisch polymerisierbaren Massen verwendbare.

C-C-labile Verbindungen, wie sie etwa in der DE-PS 12 19 224 beschrieben werden; es handelt sich um 1,2-substituierte Ethane der allgemeinen Formel 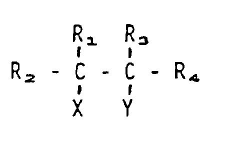 worin R₁ und R₃ aromatische Reste, R₂ ein Wasserstoffatom oder einen aliphatischen oder aromatischen Rest, R₄ einen aliphatischen oder aromatischen Rest und X und X eine gegebenenfalls blockierte Hydroxylgruppe und/oder Halogen bedeuten.

Weitere Beispiele für 1,2-substituierte Ethane, die als Initiatoren für die radikalische Polymerisation unter Wärmezufuhr geeignet sind, sind solche der allgemeinen Formel 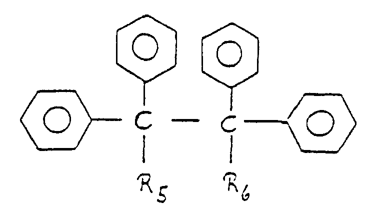 worin R₅ und R₆ unabhängig voneinander, -OH, -OCH₃, -OC₆H₅, -CH₃, -CN, -NH₂, -Cl oder, -OSi(CH₃)₃, bedeuten, wie beispielsweise von A. Bletzki und W. Krolikowski in Kunststoffe 70 (1930) 9, Seiten 558 bis 562 beschrieben.

Weitere Beispiele für thermisch aktivierbare Radikalinitiatoren auf der Basis von 1,2-substituierten Ethanen sind solche der allgemeinen Formel 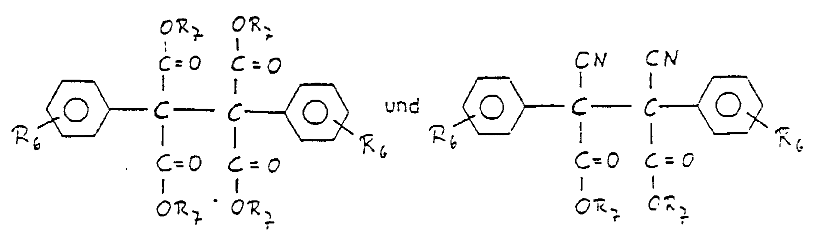 worin die Reste R₆ unabhängig voneinander Wasserstoff, oder eine oder mehrere Alkyl- oder Alkoxygruppen, wie Methyl- oder Methoxygruppen darstellen können; und worin die Gruppen R₇ unabhängig voneinander Wasserstoffataome oder Alkylgruppen, beispielsweise mit 1 - 4 Kohlenstoffatomen, wie Methylgruppen oder Ethylgruppen, darstellen. Derartige Verbindungen werden beispielsweise von H. Wolfers in Kunststoffe 68 (1978) 9, Seiten 553 bis 555 und von D. Braun in Kunststoffe 69 (1979) 2, Seiten 100 bis 104 beschrieben, es handelt sich um handelsübliche Initiatoren. Eine weitere Gruppe von thermisch aktivierbaren Radikalinitiatoren sind bifunktionelle Initiatoren vom Typ der cyclischen Silyl-Pinakol-Ether, wie beispielsweise in Polym. Bull. 16, 95 (1986) beschrieben. Wie schon für die Photoinitiatoren beschrieben, können auch die thermisch aktivierbaren Initiatoren als Gemische eingesetzt werden.

Erfindungsgemäß worden Gemische von Photoinitiatoren und thermisch aktivierbaren Initiatoren eingeseht. Die Initiatoren werden in den jeweils für Photoinitiatoren bzw. thermisch ansprechbaren Initiatoren üblichen Mengen verwendet. Die Gesamtmenge der eingesetzten Initiatoren kann beispielsweise 0,01 bis 20, bevorzugt 0,1 bis 10, besonders bevorzugt 0,1 bis 5, beispielsweise 0,5 bis 5 oder 0,5 bis 3 Gew.-%, bezogen auf die Gesamtmasse. betragen. Die maximal zusetzbare Menge ist praktisch nicht begrenzt; sie wird aus wirtschaftlichen Gründen möglichst niedrig gehalten. Die Mengenverhältnisse von Photoinitiatoren zu thermisch labilem Initiator können in breiten Bereichen variieren; sie können beispielsweise bei 1 : 1 bis 20 : 1, bevorzugt bei 1 : 1 bis 10 : 1 und umgekehrt liegen.

Es müssen Photoinitiatoren in solchen Mengen eingesetzt werden, daß nach dem thermischen Vernetzen noch eine ausreichende Vernetzung der nicht thermisch belasteten Teile durch die energiereiche Strahlung möglich ist.

Überraschenderweise hat es sich gezeigt, daß die erfindungsgemäß eingesetzten radikalisch polymerisierbare Massen besonders geeignet sind zur Imprägnierung von vorerwärmten Wickelobjekten, wobei eine Vorerwärmungstemperatur bis zu 180°C möglich ist. Dies ist besonders überraschend, da sich im Rahmen der Erfindung gezeigt hat, daß beim Tauchen vorerwärmter Wickelgüter in übliche derzeit in der Praxis eingesetzte Tränkmassen eine starke Beeinträchtigung dieser Massen erfolgt, die sich in einem unerwünschten Polymerisieren äußern kann. Das erfindungsgemäße Verfahren läßt sich daher mit diesen Massen insbesondere durch Tauchen durchführen, ohne daß eine Beeinträchtigung der Massen erfolgt. Zudem hat sich gezeigt, daß diese Massen eine gute Lagerstabilität insbesondere bei Temperaturen bis zu 50°C aufweisen.

im Rahmen der Erfindung hat es sich gezeigt, daß aus der großen Masse der verwendbaren Stabilisatoren innerhalb der vorstehend beschriebenen Kombination die Stabilisatoren vom Typ der Hydrochinone, der Chinone, der Alkylphenole und/oder Alkylphenolether geeignet sind. Beispiele hierfür sind Hydrochinon, Methylhydrochinon, p-Benzochinon, sekundäre und tertiäre Methylphenole, tertiäre Butylphenole, tertiäre Amylphenole, Octylphenole, butylierte Xylenole und butylierte Kresole.

Erfindungsgemäß ist es günstig, die Stabilisatoren als Gemische einzusetzen. Dabei sollten mindestens zwei der erfindungsgemäß angegebenen Stabilisatoren ausgewählt werden, damit gewährleistet ist, daß einerseits eine Thermostabilität der Tränkharze bis zu einer Temperatur unter 50°C über längere Zeit gegeben ist und andererseits bei einer Härtungstemperatur oberhalb 100°C eine Reaktion der Tränkharzmassen nicht mehr verhindert wird. Die Stabilisatoren werden in üblichen Mengen verwendet. Die Gesamtmenge der eingesetzten Stabilisatoren kann beispielsweise 0,005 bis 0,5, bevorzugt 0,01 bis 0,1, besonders bevorzugt 0,01 bis 0,05 Gew.-%, bezogen auf die Gesamtmasse, betragen. Die Mengenverhältnisse zwischen den Stabilisatoren können in breiten Bereichen variieren, sie können beispielsweise im Falle des Einsatzes von zwei Stabilisatoren bei einem Verhältnis von 1 : 1 bis 20 : 1, bevorzugt bei 1 : 1 bis 10 : 1 und umgekehrt liegen. Ähnliche Bereiche sind bei einem Einsatz von mehr als zwei Stabilisatoren möglich. Geeignet sind besonders Mischungen von Stabilisatoren vom Chinontyp mit solchen vom Alkylphenoltyp.

Als Tränkharzmassen sind radikalisch polymerisierbare Massen verwendbar, die dem Fachmann als radikalisch polymerisierbare Materialien bekannt sind. Es kann sich dabei um Monomere, Oligomere oder Polymere bzw. Copolymere handeln.

Beispiele für radikalisch polymerisierbare Massen sind übliche strahlenhärtbare, insbesondere UV-härtbare Massen auf der Basis von Monomeren, Oligomere, Polymeren, Copolymeren oder Kombinationen davon, mit einer oder mehreren olefinischen Doppelbindungen, wie beispielsweise Acrylsäure- und Methacrylsäureester sowie Verbindungen mit einer oder mehreren vinylischen oder allylischen Doppelbindungen. Beispiele für monofunktionelle Monomere sind Butyl(meth)acrylat und Beispiele für tri- und tetrafunktionelle Monomere sind Trimethylolpropantri(meth)acrylat und Pentaerythrit-tri- oder tetra(meth)acrylat. Der hier verwendete Ausdruck (Meth)acrylat bedeutet Acrylate und/oder Methacrylate. Beispiele für vinylisch oder allylisch ungesättigte Monomere sind Styrol und Styrolderivate, wie Divinylbenzol, p-Methylstyrol und Vinyltoluol. Beispiele für Allylverbindungen sind Diallylphthalat und Pentaerythrit-tri- oder - tetraallylester. Beispiele für Oligomere oder Prepolymere sind (meth)acrylfunktionelle (Meth)acrylpolymere, Epoxidharz(meth)acrylate, z.B. Umsetzungsprodukte aus 2 Mol (Meth)acrylsäure und handelsüblichen Epoxidharzen, wie z. B. Epicote^{R} 828, Polyester(meth)acrylate, Polyether(meth)acrylate, Urethan(meth)acrylate, Amin(meth)acrylate, ungesättigte Polyester, ungesättigte Polyurethane, Silicon(meth)acrylate oder Kombinationen davon. Beispiele für derartige härtbare Produkte sind in folgenden Literaturstellen beschrieben:

Epoxy(meth)acrylat in EP-A-0 033 896, EP-A-0 049 992 und US-A-4 485 123; Urethan(meth)acrylate in EP-A-0 053 749, EP-A-0 209 684 und US-A-4 162 274; Polyester(meth)acrylate in EP-A-0 083 666, DE-A-38 10 140. DE-A-38 20 294.

Besonders geeignet für die vorliegende Erfindung sind radikalisch polymerisierbare Massen, die olefinisch ungesättigte Polyester und als Reaktivverdünner olefinisch ungesättigte Monomere enthalten, wie sie in der EP-A-0 134 513 angegeben sind. Diese Monomere können einfach oder mehrfach ungesättigt sein. Beispiele für derartige Monomere sind solche, wie sie vorstehend angegeben wurden. Günstig sind Acryloyl- und/oder Methacryloylverbindungen. Besonders bevorzugte Beispiele für derartige Reaktiwerdünner sind Hexandioldiacrylat und Butandioldiacrylat, die allein oder im Gemisch zusammen mit den ungesättigten Polyestern eingesetzt werden können. Weitere Beispiele für Monomere, die günstig mit olefinisch ungesättigten Polyestern eingesetzt werden, sind Styrol und Vinyltoluol. Beispiele für Tränkharzmassen auf der Basis von olefinisch ungesättigten Polyestern mit Monomeren als Reaktivverdünnern werden in der EP-A-0 134 513 angegeben.

Als ungesättigte Polyester können solche Polyesterharze eingesetzt werden, die für diesen Zweck bekannt sind, insbesondere die sogenannten imidhaltigen ungesättigten Polyester, wie sie in DE-A-15 70 273, DE-A-17 70 336 und DE-A-28 56 050 beschrieben werden. Es können daher auch sogenannte imidfreie Polyester verwendet werden, wie sie seit Jahrzehnten bekannt sind. Diese ungesättigten Polyester sind Kondensationsprodukte aus mehrwertigen Carbonsäuren, mehrwertigen Alkoholen und - wenn sie imidhaltig sind - Aminogruppen enthaltenden Verbindungen, gegebenenfalls mit einem Anteil an monofunktionellen Verbindungen. Beispiele für mehrwertige Carbonsäuren sind ungesättigte Dicarbonsäuren, wie Malein- oder Fumarsäure, Citrakonsäure, Itakonsäure, gegebenenfalls im Gemisch mit gesättigten oder aromatischen Carbonsäuren, wie Bernstein- oder Adipinsäure, Phthalsäure, Isophthalsäure, Terephthalsäure und dergleichen, sowie Tetrahydrophthalsäure, Endomethylentetrahydrophthalsäure, bzw. die entsprechenden teil-oder vollhalogenierten Verbindungen (letztere haben flammhemmende Eigenschaften). Beispiele für Verbindungen mit unterschiedlichen funktionellen Gruppen sind Zitronensäure, Monoethanolamin, Aminoethancarbonsäure, sowie die entsprechenden drei oder vier CH₂-Gruppen enthaltenden Aminoalkohole oder Aminocarbonsäuren. Diese Säuren können in Form von Estern, Halbestern oder Anhydriden eingesetzt werden.

Als Hydroxygruppen enthaltende Verbindungen können ebenfalls grundsätzlich die nach dem Stand der Technik zur Herstellung von Polyestem verwendeten Verbindungen eingesetzt werden. Geeignet sind z.B. Diole, wie beispielsweise Glykol, Neopentylglykol, Propylenglykol und Polyole mit 3 oder 4 Hydroxygruppen, wie beispielsweise Glycerin, Trimethylolpropan, Trimethylolethan, Pentaerythrit, Dipentaerythrit, Trishydroxyethyl-isocyanurat.

Die imidhattigen ungesättigten Polyester enthalten zweckmäßig einkondensiert Tetrahydrophthalsäure bzw. deren Anhydrid, die mit Aminogruppen einen 5-gliedrigen Imidring bilden. Die Polyester können als Kettenabbrecher auch monofunktionelle Carbonsäuren, Alkohole und/oder Amine enthalten. Sie können auch gesättigte und ungesättigte Öle, z.B. hydroxyfunktionelle Öle, wie Ricinusöl oder carboxyfunktionelle Öle, wie Maleinatöle, enthalten.

Zur Herstellung der erfindungsgemäß verwendeten radikalisch polymerisierbaren Massen werden die vorstehend genannten Massen mit den Radikalinitiatoren, insbesondere dem Gemisch von Photoinitiatoren und thermisch aktivierbaren Initiatoren und gegebenenfalls vorhandenen Stabilisatoren vermischt. Die Vermischung kann in unterschiedlicher Reihenfolge geschehen. Vorzugsweise werden zunächst die gegebenenfalls eingesetzten Stabilisatoren in das Bindemittelgemisch eingearbeitet. Dann erfolgt die Zugabe der Initiatoren. Zusätzlich können die radikalisch polymerisierbaren Massen übliche Zusatzstoffe enthalten, wie Pigmente, Streckmittel, plastifizierende Komponenten, Beschleuniger (z.B. Metallsalze, substituierte Amine), Stabilisatoren (z.B. Hydrochinon, Benzochinon), wie sie dem Fachmann auf diesem Gebiet geläufig sind. Die Massen sind frei von Lösemitteln.

Der Einsatz von radikalisch polymerisierbaren Massen zum Imprägnieren von zu stabilisierenden Wickelgütern, beispielsweise von Drahtwicklungen, kann beispielsweise auf folgende Art erfolgen.

Durch Tauchimprägnieren; bei diesem Verfahren wird das zu imprägnierende Gut unter Einhaltung von beispielsweise durch Vorversuche ermittelten Tauchzeiten in das Tränkharz eingetaucht oder im Durchlaufverfahren durch das Tränkharz gezogen.

Durch Fluten; dabei wird das zu tränkende Gut in einen Imprägnierbehälter gebracht, der dann mit dem Tränkmittel gefüllt wird und dabei das Substrat überflutet wird.

Durch Vakuumimprägnieren und Vakuumdruckimprägnieren; bei der Anwendung dieses Verfahrens wird zunächst das zu tränkende Gut in einem Vakuumbehälter evakuiert; ist das gewünschte Vakuum erreicht, wird aus einem Vorratsbehälter das Tränkmittel in den Vakuumbehälter eingeführt und gegebenenfalls anschließend mit Druck auf das Substrat gebracht.

Beim erfindungsgemäßen Verfahren ist es auch möglich das Imprägniermittel zu erwärmen, um ein gutes Eindringen in Wickelgüter zu ermöglichen.

Nach dem Imprägnieren wird das Objekt erhitzt, um die Tränkharzmasse zu härten. Die Erzeugung der Vernetzungswärme kann über Stromfluß in den Wicklungen erfolgen, oder aber über eine separate Wärmequelle, z.B. einen Ofen oder eine Infrarotquelle.

Die weitere Aushärtungsreaktion erfolgt durch die thermische Behandlung. die On-Line bzw. kontinuierlich durchgeführt werden kann, wobei die Temperaturen beispielsweise im Bereich von etwa 80 bis 180°C bei Reaktionszeiten, die je nach dem zu härtenden System variieren, beispielsweise von 1 Minute bis 180 Minuten. Die Temperatur kann beispielsweise einfach über den Stromfluß geregelt werden. Es werden keine Masseteile erwärmt, so daß der Energieverbrauch gering bleibt.

Anschließend an den Imprägniervorgang, gegebenenfalls auch parallel zu der thermischen Vernetzung, erfolgt eine Härtung der radikalisch polymerisierbaren Masse an der Oberfläche des zu fixierenden Substrats sowie an den nicht erwärmten Masseteilen mittels einer Strahlenquelle, die energiereiche Strahlung emittiert, z.B. einer Strahlenquelle für UV-Licht oder einer Strahlenquelle für Elektronenstrahlung. Als Strahlungsquelle können übliche für die UV- bzw. Elektronenstrahlung geeignete Quellen eingesetzt werden. Als Strahlungsquelle für UV-Strahlung sind beispielsweise Quecksilber-Hochdruckstrahler und Quecksilber-Mitteldruckstrahler geeignet.

Der dreidimensionale Körper wird zur Strahlungshärtung an der Oberfläche an der Strahlungsquelle vorbeigeführt, so daß das Verfahren On-Line durchgeführt werden kann. Dabei kann der Gegenstand beispielsweise rotierend an der Strahlenquelle vorbeigeführt werden, um eine gleichmäßige Strahlenaufnahme zu gewahrleisten.

Die energiereiche Strahlung kann beispielsweise für einen Zeitraum zwischen 5 Sekunden und 15 Minuten auf das Objekt einwirken, insbesondere zwischen 2 und 10 Minuten. Die Zeit kann bei ausreichender Energiedichte auch wesentlich kürzer sein. Dabei werden die noch nicht thermisch ausgehärteten Teile des Tränkmittels vernetzt. Ebenso wird die Oberfläche der Wickelgüter, die unter Umständen noch nicht eine ausreichende thermische Vernetzung erhalten haben, über die Strahlung nachvernetzt. Es entstehen Wickelgüter die eine einheitlich vernetzte Oberfläche aufweisen.

Durch das erfindungsgemäße Verfahren können Wickelgüter mit elektrisch leitfähigen Teilen fixiert werden. Im Prinzip ist das erfindungsgemäße Verfahren jedoch auch auf andere Substrate anwendbar, die einer thermischen Aushärtung und Fixierung bedürfen. Besonders geeignet ist das erfindungsgemäße Verfahren zur Fixierung von Drahtwicklungen, insbesondere zur Fixierung von elektrischen Wicklungen, wie sie in elektrischen Betriebsmitteln eingesetzt werden, beispielsweise in Rotoren, Statoren, Transformatoren usw. Darüber hinaus kann das erfindungsgemäße Verfahren jedoch auch zur Fixierung von Wickelgütern verwendet werden, die Metallfolien, beispielsweise Kupferfolien, auf dem elektrischen Sektor aufweisen.

Durch das erfindungsgemäße Verfahren werden Emissionen flüchtiger Monomerer durch schnelle Bildung einer Polymerschicht weitgehend verhindert. Ebenso können durch die rasche Erwärmung an den getränkten Bereichen die Tränkmittel durch beginnendes Gelieren rasch fixiert werden, so daß ein Abfließen aus bzw. von dem Substrat verhindert wird. Hierdurch wird der Materialverbrauch bei gleicher Imprägnierqualität stark verringert bzw. es ergibt sich eine verbesserte Imprägnierqualität bei gleichem Materialverbrauch. Das Verfahren führt zu einer verbesserten Wirtschaftlichkeit und/oder zu einer längeren Standzeit der Wicklungen bei thermomechanischer Belastung. Ein besonderer Vorteil des erfindungsgemäßen Verfahrens liegt darin, daß es On-Line bzw. kontinuierlich durchgeführt werden kann. Weiterhin können durch das erfindungsgemäße Verfahren Einsparungen in der Anlagentechnik, z.B. aufwendiger Öfen, erzielt werden.

### Referenzbeispiel 1:

Es wird eine styrolische Lösung eines Gemisches aus einem Isophthalsäurepolyester mit einem Imidpolyester (Herstellung gemäß EP-A-0 134 513) mit einem Thermoinitiator und einem Photoinitiator zu einem Überzugsmittel verarbeitet (wie in DE 43 18 048 beschrieben):

| | |
|---|---|
| 50 | Teile ungesättigte Imidpolyester (fest) |
| 50 | Teile Isophthalsäurepolyester (fest) |
| 77,5 | Teile Styrol (Lösungsmittel) |
| 0,05 | Teile Hydrochinon (Stabilisator) |
| 5 | Teile Phenylethanderivat (DE-A-12 19 224) (Thermoinitiator) |
| 5 | Teile 1-Phenyl-1-Hydroxypropiophenon (Photoinitiator) |

### Vergleichsversuch:

Ein Stator wird langsam (35 mm/min) in das Überzugsmittel gemäß Referenzbeispiel 1 eingetaucht, nach 1 Minute Verweilzeit langsam wieder ausgetaucht und dann 20 Minuten abtropfen gelassen.

Danach wird er in einem Ofen 1 Stunde bei 150°C gehärtet.

### Beispiel 1:

Es wird ein Stator gemäß dem Verfahren des Vergleichsversuchs 1 imprägniert. Dann wird der Stator elektrisch in 2 Minuten auf 150°C aufgeheizt und 8 Minuten bei der Temperatur gehalten. Anschließend wird 10 Minuten mit UV-Licht von einer Wellenlänge von ca. 350 nm bestrahlt.

### Beispiel 2:

Ein Stator wird elektrisch 2 Minuten aufgeheizt, so daß eine Temperatur von 60°C erreicht wird. Er wird langsam in das Überzugsmittel gemäß Referenzbeispiel 1 eingetaucht, 10 Sekunden dort gehalten und wieder aus dem Überzugsmittel gehoben. Dann kann der Stator 5 Minuten abtropfen. Die Härtung geschieht elektrisch durch 2 Minuten Aufheizen und 8 Minuten Halten bei 150°C. Danach wird 10 Minuten mit UV-Licht gehärtet.

### Beispiel 3:

Ein Stator wird in einem Ofen auf 60°C erwärmt und dann wie im Beispiel 2 getränkt, elektrisch erhitzt und bestrahlt.

Die Statoren sind gehärtet und weisen auch an den nicht mit Strom durchqeflossenen Teilen eine qute Vernetzung auf. Es wird die Menge des beim Härten durch Tropfen verlorenen Naßharzes bestimmt sowie die Menge des abgedampften Styrols. Die aufgenommene Menge an Trockenharz liegt weitgehend konstant zwischen 43 und 46 g pro Stator.

| | Abtropfverlust beim Härten | Styrolverlust |
|---|---|---|
| Vergleichsversuch | 35 g | 20 g |
| Beispiel 1 | 24 g | 11 g |
| Beispiel 2 | 9 g | 4 g |
| Beispiel 3 | 16 g | 9 g |

Die elektrischen Eigenschaften sowie die mechanische Stabilität der Statoren sind gut. Erfindungsgemäß treten wesentlich weniger Styrolverluste in die Umgebung aus und weniger Harzverluste von dem nassen Überzugsmittel.

### Beispiel 4:

Zwei übliche Tränkharze auf der Basis eines ungesättigten Polyesterimids (UPEI) und eines ungesättigten Polyesters (UPE), hergestellt beispielsweise gemäß EP-A-0 134 513, sind mit unterschiedlichen Mengen der Komponenten der erfindungsgemäßen Hilfsstoffkombination, d.h. mit
- Acylphosphinoxid (APO),
- C-C-labilen Initiatoren,
- Stabilisatoren vom Typ der Hydrochinone (Stabi 1) und/oder der Chinone (Stabi 2), und/oder
- Stabilisatoren vom Typ der Alkylphenole (Stabi 3) und/oder der Alkylphenolether (Stabi 4)
versetzt.

Die Vergleichsbeispiele enthalten kein APO.

Als weitere Vergleichsbeispiele wurden Tränkharzmassen auf der Basis von UPE hergestellt, die an Stelle der C-C-labilen Initiatoren als thermisch labile Initiatoren ein Peroxid bzw. eine Azoverbindung enthalten.

Tränkharzmassen folgender in der Tabelle 1 angegebener Zusammensetzung wurden hergestellt. Die Zahlenangaben in der Tabelle beziehen sich auf 100 Gewichtsteile Tränkharzmasse.

**TABELLE 1:**

| **Zusammensetzung der Tränkharzmassen** | | | | | | | |
|---|---|---|---|---|---|---|---|
| **Vergleichsbeipiel** | **Harz** | **C-C-labil** | **APO** | **Stabi 1** | **Stabi 2** | **Stabi 3** | **Stabi 4** |
| 1 | UPEI | 1 | | 0,01 | - | - | - |
| 2 | UPEI | 2 | | 0,01 | - | - | 0,01 |
| 3 | UPEI | 2 | | 0,01 | - | | 0,01 |
| 4 | UPE | 1' | | 0,005 | - | - | 0,005 |
| 5 | UPE | 2' | | 0,007 | - | - | 0,007 |
| | **Peroxid** | | | | | | |
| 6 | UPE | 1 | - | 0,02 | - | - | - |
| | **Azovbdg.** | | | | | | |
| 7 | UPE | 0.50' | - | 0,02 | - | - | - |
| | | | | | | | |

| **Beispiel** | **Harz** | **C-C-labil** | **APO** | **Stabi 1** | **Stabi 2** | **Stabi 3** | **Stabi 4** |
|---|---|---|---|---|---|---|---|
| 4 - 1 | UPEI | 1 | 1 | 0,008 | 0,002 | - | - |
| 4 - 2 | UPEI | 2 | 1 | 0,01 | 0,002 | - | 0,01 |
| 4 - 3 | UPEI | 2 | 1 | 0,01 | - | 0,04 | 0,01 |
| 4 - 4 | UPE | 1' | 1 | 0,005 | 0,003 | - | 0,005 |
| 4 - 5 | UPE | 2' | 1 | 0,007 | - | 0,04 | 0,007 |

Der Nachweis der verbesserten Stabilität der erfindungsgemäßen Tränkharzmassen wird über die Temperaturbelastungsprüfung durchgeführt.

Dazu erwärmt man einen Eisenblock mit einer Masse von 525 g und Kantenlängen von 120 x 60 x 10 mm in einem Trockenschrank auf 150°C und taucht den vorgewärmten Block in 1000 g Tränkharzmasse. Anschließend lagert man den Block für 30 Sekunden in der Tränkharzmasse und läßt dann ebenfalls für 30 Sekunden über dem Tränkharz abtropfen. Nach jeweils einer halben Stunde wird dieser Vorgang wiederholt (30 Minuten = 1 Zyklus). Nach jedem Tauchen wird umgerührt, und man läßt bis zum Ende des jeweiligen Zyklus den Behälter mit dem Tränkharz offen stehen.

Nach insgesamt 15 Zyklen wird die Stabilität durch Prüfung der
- Viskosität (Messung der Auslaufzeit),
- Reaktivität (Gelierzeitmessung),
- Stabilität bei 40°C und
- Stabilität bei 50°C
ermittelt.

Die Ergebnisse der Temperaturbelastungsprüfung sind in der folgenden Tabelle 2 zusammengefaßt:

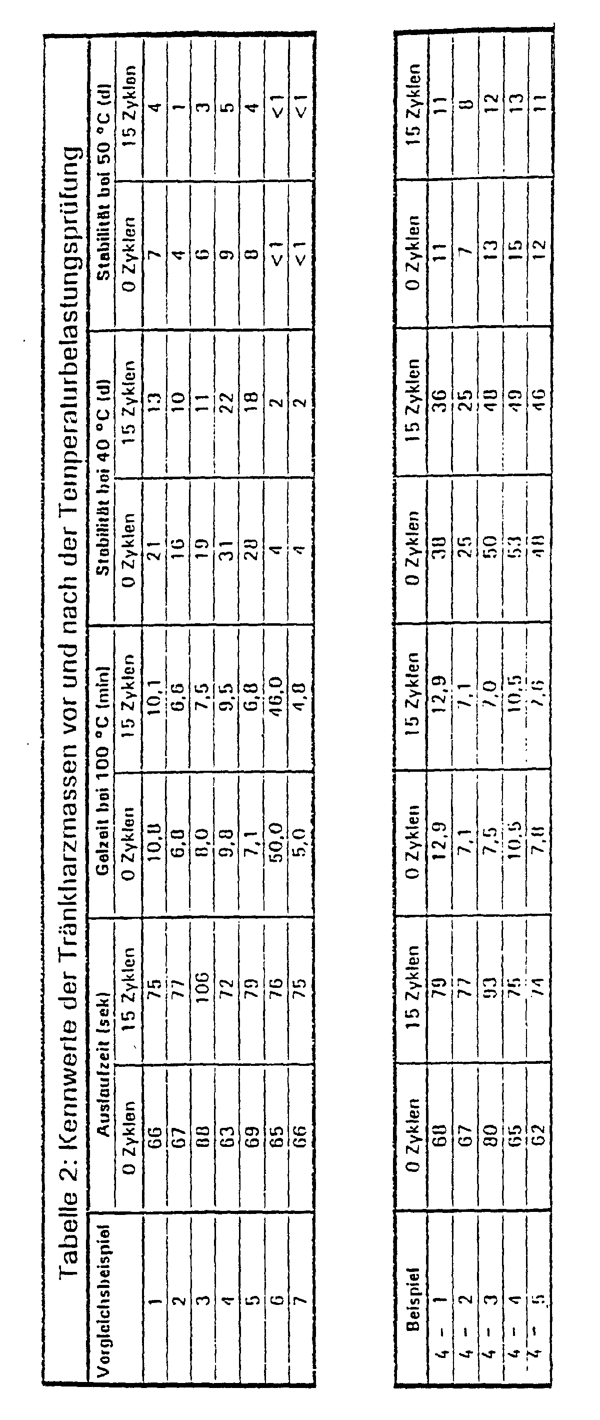

Bei Abwesenheit der Komponente APO aus der erfindungsgemäßen Hilfsstoffkombination (Vergleichsbeispiele 1 bis 5) verringern sich die Werte für die Stabilität bei 40°C und bei 50°C nach einer Zeitdauer von 15 Zyklen. Befindet sich dagegen die Komponente APO bei einem nahezu gleichbleibenden Gehalt an Stabilisatoren in der Zusammensetzung, (Beispiele 4 - 1 bis 4 - 5) so erhöht sich die Stabilität bei 40°C und 50°C und bleibt bei einer Zeitdauer von 15 Zyklen nahezu gleich hoch.

Die Tränkharzmassen, die anstelle der erfindungsgemäßen Komponenten der Hilfsstoffkombination als Initiatoren ein Peroxid bzw. eine Azoverbindung enthalten, weisen generell eine wesentlich geringere Lagerstabilität auf (Vergleichsbeispiele und Beispiele 4 - 6 und 4 - 7).

## Patentansprüche

1. Verfahren zur Fixierung von Wickelgütern aus elektrisch leitfähigen Materialien, durch Tränken, wobei das Tränken erfolgt durch Tauchen, Fluten, Vakuumimprägnieren oder Vakuumdruckimprägnieren mit radikalisch polymerisierbaren Massen, und thermisches Härten, **dadurch gekennzeichnet, daß** die Wickelgüter im vorerwärmten Zustand mit einer radikalisch polymerisierbaren Masse getränkt werden, die eine Hilfsstoffkombination enthält aus
A) einem oder mehreren Acylphosphinoxiden als Photoinitiatoren,
B) einem oder mehreren C-C-labilen, auf Wärme ansprechenden Initiatoren und
C) einem oder mehreren Stabilisatoren vom Typ der Hydrochinone, Chinone, Alkylphenole und/oder Alkylphenolether,
und gleichzeitig mit oder nach dem thermischen Härten durch energiereiche Strahlung ausgehärtet wird.

2. Verfahren nach Anspruch 1, **dadurch gekennzeichnet, daß** das thermische Härten durch Anlegen von elektrischem Strom an die Wicklungen der Wickelgüter erfolgt.

3. Verfahren nach Anspruch 1 oder 2, **dadurch gekennzeichnet, daß** das Vorerwärmen durch Anlegen von elektrischem Strom an die Wicklungen der Wickelgüter erfolgt.

4. Verfahren nach Anspruch 3, **dadurch gekennzeichnet, daß** das Vorerwärmen auf Temperaturen bis zu 180°C erfolgt.

5. Verfahren nach einem der Ansprüche 1 bis 4, **dadurch gekennzeichnet, daß** die Härtung der Oberfläche mit UV-Strahlung oder Elektronenstrahlung erfolgt.

6. Verfahren nach einem der Ansprüche 1 bis 5, **dadurch gekennzeichnet, daß** als Wickelgüter Wicklungen aus elektrisch leitenden Drähten fixiert werden.

7. Verfahren nach einem der vorhergehenden Ansprüche, **dadurch gekennzeichnet, daß** die Wicklungen während des Tränkens zusätzlich erwärmt werden.

8. Verfahren nach einem der Ansprüche 1 bis 7, **dadurch gekennzeichnet, daß** die thermische Vernetzung nach dem Tränken erfolgt.

## Claims

1. A process for the fixation of winding materials made of electrically conductive materials by impregnation, the impregnation being carried out by immersion, flooding, vacuum impregnation or vacuum pressure impregnation, with substances which are polymerisable by a radical mechanism, and by thermal curing, **characterised in that** the winding materials are Impregnated in a preheated state with a substance which is polymerlsable by a radical mechanism and which contains an adjuvant substance combination comprising
A) one or more acyl phosphine oxides as photoinitiators,
B) one or more Initiators with labile C-C bonds and which respond to heat, and
C) one or more stabilisers of the type comprising hydroquinones, quinones, alkylphenols and/or alkylphenol ethers and are cured by high-energy radiation simultaneously with or after thermal curing.

2. A process according to claim 1, **characterised in that** thermal curing Is effected by the application of electrical current to the windings of the winding materials.

3. A process according to claim 1 or 2, **characterised in that** preheating is effected by the application of electrical current to the windings of the winding materials.

4. A process according to claim 3, **characterised in that** preheating is effected to temperatures up to 180°C.

5. A process according to any one of claims 1 to 4, **characterised In that** curing of the surface is effected with UV radiation or with an electron beam.

6. A process according to any one of claims 1 to 5, **characterised in that** windings comprising electrically conducting wires are fixed as the winding materials.

7. A process according to any of the preceding claims, **characterised in that** the windings are heated additionally during impregnation.

8. A process according to any one of claims 1 to 7, **characterised in that** thermal crosslinking is effected after impregnation.

## Revendications

1. Procédé de fixation de produits bobinés de matériaux électriquement conducteurs, par imprégnation par trempage, l'imprégnation par trempage s'effectuant par Immersion, imprégnation sous vide ou imprégnation sous pression et sous vide avec des masses polymérisables par vole radicalaire et durcissement thermique, **caractérisé en ce qu'**on imprègne les produits bobinés après les avoir réchauffés, avec une masse polymérisable par vole radicalaire, qui contient une combinaison d'additifs constituée de
A) un ou plusieurs oxydes d'acylphosphine comme photoinitiateurs,
B) un ou plusieurs initiateurs à liaison C-C labile excitables par la chaleur, et
C) un ou plusieurs stabilisants du type des hydroquinones, des quinones, des alkylphénols et/ou des éthers d'alkylphénol
et qu'ils sont durcis simultanément à ou après le durcissement thermique par rayonnement énergétique.

2. Procédé selon la revendication 1, **caractérisé en ce qu'**on réalise le durcissement thermique par application d'un courant électrique aux bobinages des produits bobinés.

3. Procédé selon la revendication 1 ou 2, **caractérisé en ce qu'**on réalise le préchauffage par application de courant électrique aux bobinages des produits bobinés.

4. Procédé selon la revendication 3, **caractérisé en ce qu'**on réalise le préchauffage à des températures pouvant atteindre 180°C.

5. Procédé selon l'une des revendications 1 à 4, **caractérisé en ce qu'**on réalise le durcissement de la surface par rayonnement UV ou par rayonnement électronique.

6. Procédé selon l'une des revendications 1 à 5, **caractérisé en ce qu'**on fixe comme produits bobinés des bobinages constitués de fils électriquement conducteurs.

7. Procédé selon l'une des revendications précédentes, **caractérisé en ce qu'**on chauffe les bobinages aussi lors de l'imprégnation.

8. Procédé selon l'une des revendications 1 à 7, **caractérisé en ce que** la réticulation thermique a lieu après l'imprégnation.
